# EUROPÄISCHE PATENTSCHRIFT

(11) **EP 2 684 276 B1**
(45) Veröffentlichungstag und Bekanntmachung des Hinweises auf die Patenterteilung: **23.09.2015**
(21) Anmeldenummer: 12712154.9
(22) Anmeldetag: 27.02.2012
(51) Int. Cl.: H02J 3/00, H02J 3/14, H02J 9/00

(54) **HAUSGERÄT MIT EINEM BEREITSCHAFTSMODUS SOWIE VERFAHREN ZUM BETREIBEN EINES SOLCHEN**
DOMESTIC APPLIANCE HAVING A STAND-BY MODE AND METHOD FOR OPERATING SUCH A DOMESTIC APPLIANCE
APPAREIL MÉNAGER AYANT UN MODE DE VEILLE AINSI QUE PROCÉDÉ POUR FAIRE FONCTIONNER UN TEL APPAREIL MÉNAGER

(30) Priorität: 11.03.2011 ES 201130336 P
(43) Veröffentlichungstag der Anmeldung: 15.01.2014
(73) Patentinhaber: BSH Hausgeräte GmbH, 81739 München (DE)
(72) Erfinder: ANTÓN FALCÓN, Daniel, 50010 Zaragoza (ES); CARRETERO CHAMARRO, Claudio, 50003 Zaragoza (ES); GARDE ARANDA, Ignacio, 50012 Zaragoza (ES); HERNÁNDEZ BLASCO, Pablo Jesus, 50410 Cuarte de Huerva, Zaragoza (ES); HERRERA RODRÍGUEZ, Javier, 50009 Zaragoza (ES); LLORENTE GIL, Sergio, 50009 Zaragoza (ES); LUCIA GIL, Oscar, 50006 Zaragoza (ES); MILLAN SERRANO, Ignacio, 50018 Zaragoza (ES); PALACIOS TOMÁS, Daniel, 50008 Zaragoza (ES)
(86) Internationale Anmeldenummer: PCT/IB2012/050889
(87) Internationale Veröffentlichungsnummer: WO 2012/123838

(56) Entgegenhaltungen:
- US-A1- 2002 195 880
- US-A1- 2010 008 117
- US-A1- 2010 302 757

## Beschreibung

Die Erfindung betrifft ein Hausgerät - insbesondere zur Zubereitung von Lebensmitteln -, welches zwischen einem Bereitschaftsmodus (Standby) und einem Betriebsmodus (Aktivmodus) hin und her schaltbar ist. Das Hausgerät weist einen elektrischen Netzanschluss auf, an welchem eine elektrische Netzspannung gegenüber einem Bezugspotential angelegt werden kann. Es beinhaltet auch eine Hauptversorgungseinheit - etwa ein Netzteil -, welche aus der Netzspannung eine elektrische Betriebsspannung bereitstellt, nämlich an einem Ausgang. Ein elektrischer Verbraucher (zum Beispiel eine Hauptsteuereinheit und/oder ein Sensor des Hausgeräts) wird mit der Betriebsspannung versorgt. Die Erfindung bezieht sich auch auf ein Verfahren zum Betreiben eines derartigen Hausgerätes.

Es ist Stand der Technik, ein Netzteil in einem Hausgerät einzusetzen. Das Netzteil hat die Aufgabe, die elektrische Netzspannung, die eine Wechselspannung ist, in eine Betriebsspannung umzuwandeln, die an die elektrischen Verbraucher des Hausgeräts, etwa eine Steuereinheit, angepasst ist. Die Betriebsspannung ist in der Regel eine Gleichspannung. Das Interesse richtet sich vorliegend auf ein Hausgerät, welches einen Bereitschaftsmodus aufweist, der auch unter der Bezeichnung "Standby" bekannt ist. Dieser Bereitschaftsmodus ist gegenüber dem Betriebsmodus ein energieeffizienter Modus, in welchem das Hausgerät weniger Energie als im Betriebsmodus verbraucht. Einerseits soll durch den Bereitschaftsmodus sichergestellt sein, dass gespeicherte Daten nicht verloren gehen und die Bedienperson das Hausgerät schnell aktivieren kann, ohne dass eine Zurücksetzung der Programmcodes und ein "Neustart" des Geräts erforderlich sind. Auf der anderen Seite soll im Bereitschaftsmodus der Energieverbrauch auf ein Minimum reduziert werden.

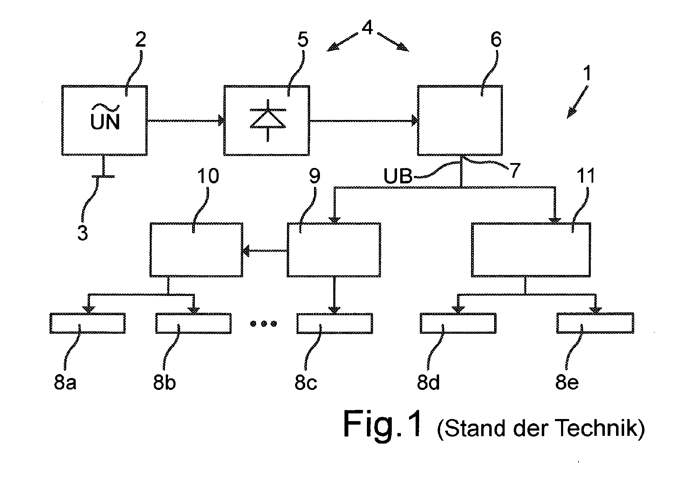

Um die Energieaufnahme im Bereitschaftsmodus möglichst minimal zu halten, werden im Stand der Technik integrierte Schaltkreise (integrated circuit, IC) eingesetzt, welche in einen eigenen Bereitschaftsmodus versetzt werden können. Beispielsweise werden hier Spannungsregler mit einer integrierten Standby-Funktionalität verwendet. Wird der Spannungsregler in den Bereitschaftsmodus geschaltet, so werden auch die angeschlossenen Verbraucher von der elektrischen Spannung entkoppelt. Ein Blockschaltbild einer bekannten Schaltungsanordnung 1 für ein Hausgerät ist in Fig. 1 dargestellt. Sie beinhaltet einen Netzanschluss 2, an welchem eine Netzspannung UN bereitgestellt wird, nämlich gegenüber einem Bezugspotential 3. Mit dem Netzanschluss 2 ist eine Hauptversorgungseinheit 4 direkt verbunden. Diese beinhaltet einen Brückengleichrichter 5 - gegebenenfalls auch mit einem Glättungskondensator (hold up)-, wie auch ein Netzteil oder einen Spannungswandler 6. An einem Ausgang 7 der Hauptversorgungseinheit 4 liegt eine Betriebsspannung UB an, die aus der Netzspannung UN erzeugt wird. Also stellt die Hauptversorgungseinheit 4 die Betriebsspannung UB bereit. Mit dieser Betriebsspannung UB werden dann eine Vielzahl von elektrischen Verbrauchern 8a bis 8e versorgt, deren Anzahl prinzipiell beliebig sein kann. Die Verbraucher 8a bis 8e können eine Hauptsteuereinheit des Hausgeräts beinhalten, wie auch Sensoren jedweder Art und dergleichen. Die Betriebsspannung UB wird am Ausgang 7 durch einen Spannungsregler 9 abgegriffen und stabilisiert bzw. geregelt. Mit dem Spannungsregler 9 ist auch ein weiterer Spannungsregler 10 verbunden. Während die Verbraucher 8a und 8b über den Spannungsregler 10 gespeist werden, versorgt der Spannungsregler 9 den Verbraucher 8c. Die Verbraucher 8d und 8e sind hingegen über einen Leistungsteiler 11 mit dem Ausgang 7 der Hauptversorgungseinheit 4 gekoppelt. Sowohl die Spannungsregler 9, 10 als auch der Leistungsteiler 11 sind als integrierte Schaltkreise bereitgestellt, die in einen internen Bereitschaftsmodus versetzt und somit quasi abgeschaltet werden können. Wird das Hausgerät in den Bereitschaftsmodus geschaltet, so werden entsprechende Steuersignale an die integrierten Schaltkreise abgegeben und diese Schaltkreise abgeschaltet. Somit werden auch die Verbraucher 8a bis 8e von der Betriebsspannung UB getrennt.

Um die Energieaufnahme des gesamten Hausgeräts im Bereitschaftsmodus auf ein Minimum zu reduzieren, soll auch der Verbrauch der Schaltkreise im Bereitschaftsmodus entsprechend klein sein. Der Energieverbrauch des gesamten Hausgeräts im Bereitschaftsmodus hängt nämlich unmittelbar von der Energieaufnahme der Schaltkreise ab. Auf der einen Seite muss somit die Anzahl der Schaltkreise im Hausgerät begrenzt werden; auf der anderen Seite müssen entsprechende Schaltkreise gewählt und eingesetzt werden, deren Energieverbrauch im Bereitschaftsmodus sehr gering ist. Dies ist wiederum mit einem relativ großen Aufwand bei der Wahl der Schaltkreise verbunden, wie auch mit erhöhten Kosten für die Schaltkreise. Außerdem verbraucht im Bereitschaftsmodus auch die Hauptversorgungseinheit 4 relativ viel Energie. Eine besondere Herausforderung besteht darin, eine Lösung zu finden, wie der Aufwand bei der Wahl der Schaltkreise sowie die Kosten für die Schaltkreise auf ein Minimum reduziert werden können, ohne dass der Energieverbrauch des gesamten Hausgeräts im Bereitschaftsmodus erhöht wird.

Aus der US 2002/0195880 A1 (vergl. den Oberbegriff der unabhängigen Ansprüche) ist eine Stromversorgung für ein Haushaltsgerät bekannt, die einen Standby-Modus und einen Betriebsmodus aufweist. Dort wird ein Arbeitskreis über einen zweiten an die Stromversorgung gekoppelten Stromkreis vom Standby- in den Betriebsmodus geschaltet.

Aus der US 2010/008117 A1, ist ein elektrisches Gerät bekannt, welches das Schalten eines Transformators in einem Standby-Modus ermöglicht.

Es ist Aufgabe der Erfindung, einen Weg aufzuzeigen, wie bei einem Hausgerät der eingangs genannten Gattung einerseits eine gewisse Freiheit bei der Wahl von elektronischen Komponenten - etwa der genannten Schaltkreise - ermöglicht und andererseits auch der Energieverbrauch des Hausgeräts im Bereitschaftsmodus auf ein Minimum reduziert werden können.

Diese Aufgabe wird erfindungsgemäß durch ein Hausgerät mit den Merkmalen gemäß Patentanspruch 1 gelöst, wie auch durch ein Verfahren mit den Merkmalen des Patentanspruchs 10. Vorteilhafte Ausführungen der Erfindung sind Gegenstand der abhängigen Patentansprüche, der Beschreibung und der Figuren.

Ein erfindungsgemäßes Hausgerät kann zwischen einem Bereitschaftsmodus und einem Betriebsmodus hin und her geschaltet werden. Es weist einen Netzanschluss auf, an welchem eine elektrische Netzspannung bereitgestellt werden kann, und zwar gegenüber einem Bezugspotential (Masse). Eine Hauptversorgungseinheit ist zum Bereitstellen einer elektrischen Betriebsspannung aus der Netzspannung ausgebildet, nämlich an einem Ausgang der Hauptversorgungseinheit. Mit der Betriebsspannung kann zumindest ein elektrischer Verbraucher versorgt werden. Es ist ein elektrischer Schalter bereitgestellt, mittels welchem im Bereitschaftsmodus zumindest der Ausgang der Hauptversorgungseinheit von dem Netzanschluss elektrisch getrennt ist. Über den Schalter kann somit zumindest der Ausgang der Hauptversorgungseinheit - und insbesondere die gesamte Hauptversorgungseinheit - mit dem Netzanschluss gekoppelt werden; im Bereitschaftsmodus befindet sich der Schalter in seinem elektrisch sperrenden Schaltzustand. Das Hausgerät umfasst außerdem mit dem Netzanschluss gekoppelte-insbesondere direkt verbundene - und von der Hauptversorgungseinheit separate bzw. verschiedene Spannungsversorgungsmittel, welche im Bereitschaftsmodus die Netzspannung an dem Netzanschluss abgreifen und aus dieser Netzspannung eine Versorgungsspannung - insbesondere eine Gleichspannung - bereitstellen, mit welcher der elektrische Schalter in seinen elektrisch leitenden Schaltzustand und hierdurch das Hausgerät von dem Bereitschaftsmodus in den Betriebsmodus geschaltet werden können.

Das Hausgerät beinhaltet eine Leistungselektronikeinheit (power elektronics). Diese Leistungselektronikeinheit kann elektrische Verbraucher umfassen, die eine relativ hohe Leistung verbrauchen und mit einer elektrischen Spannung hoher Amplitude versorgt werden, etwa mit der gleichgerichteten Netzspannung. Die Leistungselektronikeinheit kann über einen weiteren elektrischen Schalter, insbesondere mechanischen Schalter, bevorzugt ein Relais, mit dem Netzanschluss gekoppelt werden. Beim Schalten des Hausgeräts von dem Bereitschaftsmodus in den Betriebsmodus wird bevorzugt der erste Schalter (für die Hauptversorgungseinheit) und anschließend der weitere Schalter (für die Leistungselektronikeinheit) geschlossen. Dies hat den Vorteil, dass eine mit der Betriebsspannung versorgte Steuereinheit des Hausgeräts den Zeitpunkt des Schließens des weiteren Schalters und somit die Höhe eines durch die Leistungselektronikeinheit fließenden Einschaltstromes kontrollieren kann.

Der weitere Schalter kann nämlich unter Berücksichtigung eines Verlaufs der Netzspannung geschlossen werden. Dies kann beispielsweise so aussehen, dass der Zeitpunkt des Schließend des weiteren Schalters mit einem Nulldurchgang der Netzspannung zusammenfällt. Dann ist die Stromstärke des Einschaltstromes minimal, und es kann somit ein Einschaltstrombegrenzer - etwa eine Schmelzsicherung-geschont werden.
Also wird im Bereitschaftsmodus zumindest der Ausgang der Hauptversorgungseinheit, und insbesondere die gesamte Hauptversorgungseinheit, von dem Netzanschluss und somit von der Netzspannung getrennt. Es liegt somit im Bereitschaftsmodus keine Betriebsspannung am Ausgang der Hauptversorgungseinheit an, und alle an die Hauptversorgungseinheit angeschlossenen Komponenten sind von der Hauptversorgungseinheit und dem Netzanschluss vollständig entkoppelt und verbrauchen somit keine Energie, wie beispielsweise Spannungsregler, Leistungsteiler und dergleichen. Anders als im Stand der Technik wird die zum Versetzen des Hausgeräts in den Betriebsmodus benötigte Spannung mittels der separaten Spannungsversorgungsmittel erzeugt, die zu der Hauptversorgungseinheit quasi parallel geschaltet sind und kleiner und somit energieeffizienter als die Hauptversorgungseinheit ausgeführt werden können. Das erfindungsgemäße Hausgerät hat mehrere Vorteile: Zum einen können mit der Hauptversorgungseinheit im Prinzip beliebige elektronische Komponenten, wie integrierte Schaltkreise, gekoppelt sein. Diese Komponenten müssen über keine integrierte Standby-Funktionalität verfügen; denn im Bereitschaftsmodus wird ohnehin der Ausgang der Hauptversorgungseinheit vom Netzanschluss entkoppelt.

Es wird somit eine gewisse Freiheit bei der Wahl der elektronischen Komponenten ermöglicht. Zum anderen ist der Energieverbrauch des Hausgeräts im Bereitschaftsmodus minimal. Es können nämlich ausschließlich die Spannungsversorgungsmittel (zum Beispiel ein kleines Netzteil) sein, welche im Bereitschaftsmodus mit dem Netzanschluss verbunden sind, während die Hauptversorgungseinheit vom Netzanschluss vollständig getrennt werden kann.

Die Erfindung hat außerdem den Vorteil, dass bereits vorhandene Hausgeräte ohne einen Bereitschaftsmodus entsprechend nachgerüstet werden können, sodass auch sie über einen Bereitschaftsmodus verfügen. Es braucht lediglich ein elektrischer Schalter für bereits vorhandene Netzteile eingesetzt werden, wie auch Spannungsversorgungsmittel, die im Bereitschaftsmodus die Netzspannung abgreifen und die Versorgungsspannung zum Schließen des elektrischen Schalters bereitstellen.

Unter einem Hausgerät wird vorliegend insbesondere ein Haushaltsgerät verstanden, welches zur Haushaltsführung eingesetzt wird. Es kann ein Hausgerät zur Zubereitung von Lebensmitteln, etwa ein Backofen und/oder ein Kochfeld, oder aber ein Gerät zur Pflege von Wäschestücken sein, wie beispielsweise eine Waschmaschine, ein Waschtrockner oder ein Wäschetrockner.

Also dient die Hauptversorgungseinheit zum Umwandeln der Netzspannung in die Betriebsspannung, die vorzugsweise eine Gleichspannung ist. Zu diesem Zwecke kann die Hauptversorgungseinheit ein Netzteil, insbesondere ein Schaltnetzteil, und/oder einen Spannungswandler beinhalten. Die Hauptversorgungseinheit kann auch einen Gleichrichter umfassen, gegebenenfalls mit einem Glättungskondensator.

Auch die Spannungsversorgungsmittel können ein Netzteil aufweisen, mittels welchem die Netzspannung in die Versorgungsspannung umgewandelt wird. Die Spannungsversorgungsmittel können auch einen Mikrocontroller umfassen, welcher den elektrischen Schalter schließen und das Hausgerät somit in den Betriebsmodus versetzen kann, nämlich unter Ausgabe entsprechender Steuersignale an den Schalter. Gegebenenfalls kann auch das Netzteil die Funktion des Mikrocontrollers übernehmen.

Bevorzugt sind die Spannungsversorgungsmittel gegenüber der Hauptversorgungseinheit zum Bereitstellen einer geringeren elektrischen Leistung ausgebildet. Diese Leistung kann so bemessen sein, dass sie ausschließlich zum Schließen des elektrischen Schalters und insbesondere auch zum Versorgen einer Bedieneinrichtung im Bereitschaftsmodus ausreicht. Dann ist der Energieverbrauch des Hausgeräts im Bereitschaftsmodus minimal.

Das Hausgerät kann eine Bedieneinrichtung aufweisen, welche durch eine Bedienperson betätigt werden kann. Diese Bedieneinrichtung kann aufgrund einer Betätigung durch die Bedienperson ein Aktivierungssignal erzeugen, aufgrund dessen der elektrische Schalter in seinen leitenden Schaltzustand und das Hausgerät somit in den Betriebsmodus geschaltet werden. Mittels der Bedieneinrichtung kann die Bedienperson somit das Hausgerät von dem Bereitschaftsmodus in den Betriebsmodus versetzen, also aktivieren. Die Bedieneinrichtung kann eine aktive Bedieneinrichtung sein. Sie kann im Bereitschaftsmodus mit der Versorgungsspannung versorgt werden. Es kann ausschließlich die Bedieneinrichtung sein, die als elektrischer Verbraucher im Bereitschaftsmodus aktiv ist, so dass die Energieaufnahme im Bereitschaftsmodus auf ein Minimum reduziert wird.

Die Bedieneinrichtung kann zum Beispiel einen kapazitiven Schalter umfassen, dessen Kapazität sich bei einer Berührung durch die Bedienperson verändert. Aufgrund dieser Veränderung der Kapazität kann dann das Aktivierungssignal erzeugt und das Hausgerät in den Betriebsmodus versetzt werden.

Der Energieverbrauch des Hausgeräts im Bereitschaftsmodus ist dann minimal, wenn im Bereitschaftsmodus ausschließlich die Spannungsversorgungsmittel mit dem Netzanschluss verbunden sind und an diesem Netzanschluss die Netzspannung abgreifen. Dies bedeutet, dass im Bereitschaftsmodus weitere, gegebenenfalls vorhandene Netzteile von dem Netzanschluss getrennt sind und somit keine Energie verbrauchen. Diese weiteren Netzteile können ausschließlich im Betriebsmodus mit dem Netzanschluss gekoppelt werden.

Bevorzugt ist der elektrische Schalter ein mechanischer Schalter, insbesondere ein Relais. Dann fließen im Bereitschaftsmodus keine Leckströme durch den Schalter, und es entstehen keine elektrischen Verluste.

Wie bereits ausgeführt, wird im Bereitschaftsmodus zumindest der Ausgang der Hauptversorgungseinheit von dem Netzanschluss elektrisch getrennt, so dass auch alle mit dem Ausgang gekoppelten Komponenten von dem Netzanschluss entkoppelt werden. Da jedoch im Bereitschaftsmodus elektrische Verluste - etwa aufgrund von Leckströmen durch Kondensatoren - in der Hauptversorgungseinheit entstehen können, erweist sich als besonders vorteilhaft, wenn der elektrische Schalter zwischen dem Netzanschluss und der Hauptversorgungseinheit liegt. Der Schalter kann also im Bereitschaftsmodus die gesamte Hauptversorgungseinheit von dem Netzanschluss trennen, so dass keine Verluste durch die Hauptversorgungseinheit auftreten können.

Ist mit der Hauptversorgungseinheit ein Netzfilter (Filter für elektromagnetische Verträglichkeit bzw. EMV-Filter) gekoppelt, so ist der elektrische Schalter bevorzugt zwischen dem Netzfilter und dem Netzanschluss angeordnet. Dann werden auch elektrische Verluste durch das Netzfilter vermieden.

Es kann auch vorgesehen sein, dass die Spannungsversorgungsmittel zum Erfassen einer Temperatur des genanten Einschaltstrombegrenzers ausgebildet sind. Dann können die Spannungsversorgungsmittel den weiteren Schalter (für die Leistungselektronikeinheit) auch unter Berücksichtigung der Temperatur schließen. Dem liegt die Tatsache zugrunde, dass als Einschaltstrombegrenzer in der Regel NTC(negative temperature coefficient)-Elemente eingesetzt werden, deren Widerstandswert von der Temperatur abhängt. Ist die Temperatur eines solchen Einschaltstrombegrenzers relativ hoch, so ist auch der ohmsche Widerstand des Einschaltstrombegrenzers entsprechend gering. Der weitere Schalter kann also nur unter der Voraussetzung geschlossen werden, dass die erfasste Temperatur unterhalb eines vorgegebenen Grenzwertes liegt, der in einem Wertebereich von 55 °C bis 75 °C liegen und beispielsweise 65 °C betragen kann. Dann wird verhindert, dass der weitere Schalter bei einem zu geringen Widerstandswert des Einschaltstrombegrenzers geschlossen wird. Somit wird die Stromstärke des Einschaltstromes begrenzt.

Die Spannungsversorgungsmittel können auch eine weitere Funktionalität aufweisen: Sie können im Bereitschaftsmodus anhand der abgegriffenen Netzspannung den Netzanschluss auf eine Verpolung hin überprüfen. Bei einer Verpolung der dreiphasigen Netzspannung (380 Volt) kann dann das Schließen des elektrischen Schalters und somit die Aktivierung des Hausgeräts verhindert werden. Auf diesem Wege gelingt es, die Komplexität der Hauptversorgungseinheit und gegebenenfalls auch weiterer Netzteile des Hausgeräts zu reduzieren; denn die Hauptversorgungseinheit braucht nicht mehr so ausgelegt zu werden, dass sie einer Verpolung des Netzanschlusses standhält. Bei einer Verpolung verbleibt sie nämlich von dem Netzanschluss mittels des Schalters getrennt.

Die Erfindung betrifft auch ein Verfahren zum Betreiben eines Hausgeräts, welches zwischen einem Bereitschaftsmodus und einem Betriebsmodus geschaltet wird. An einem Netzanschluss wird eine elektrische Netzspannung gegenüber einem Bezugspotential angelegt, und eine Hauptversorgungseinheit stellt an ihrem Ausgang eine elektrische Betriebsspannung aus der Netzspannung bereit. Zumindest ein elektrischer Verbraucher wird mit der Betriebsspannung versorgt. Im Bereitschaftsmodus wird zumindest der Ausgang der Hauptversorgungseinheit von dem Netzanschluss mittels eines elektrischen Schalters getrennt. Mit dem Netzanschluss gekoppelte Spannungsversorgungsmittel greifen im Bereitschaftsmodus an dem Netzanschluss die elektrische Netzspannung ab und stellen aus dieser Netzspannung eine Versorgungsspannung bereit. Mit der Versorgungsspannung wird der elektrische Schalter in seinen elektrisch leitenden Schaltzustand und hierdurch das Hausgerät von dem Bereitschaftsmodus in den Betriebsmodus geschaltet.

Die mit Bezug auf das erfindungsgemäße Hausgerät vorgestellten bevorzugten Ausführungsformen und deren Vorteile gelten entsprechend für das erfindungsgemäße Verfahren.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder aber in Alleinstellung verwendbar.

Die Erfindung wird nun anhand einzelner bevorzugter Ausführungsbeispiele, wie auch unter Bezugnahme auf die beigefügten Zeichnungen näher erläutert.

Es zeigen:
- Fig. 1: ein Blockschaltbild einer Schaltungsanordnung für ein Hausgerät gemäß dem Stand der Technik;
- Fig. 2: ein Blockschaltbild einer Schaltungsanordnung für ein Hausgerät gemäß einer Ausführungsform der Erfindung;
- Fig. 3: ein Blockschaltbild einer Schaltungseinheit der Schaltungsanordnung gemäß Fig. 2, wobei mögliche Anordnungen eines elektrischen Schalters in Bezug auf eine Hauptversorgungseinheit näher erläutert werden;
- Fig. 4: in schematischer Darstellung eine Schaltungsanordnung für ein Hausgerät gemäß einer möglichen Ausführungsform der Erfindung;
- Fig. 5: in schematischer Darstellung eine Schaltungsanordnung für ein Hausgerät gemäß einer weiteren Ausführungsform der Erfindung; und
- Fig. 6: in schematischer Darstellung eine Schaltungsanordnung für ein Hausgerät gemäß noch einer weiteren Ausführungsform der Erfindung.

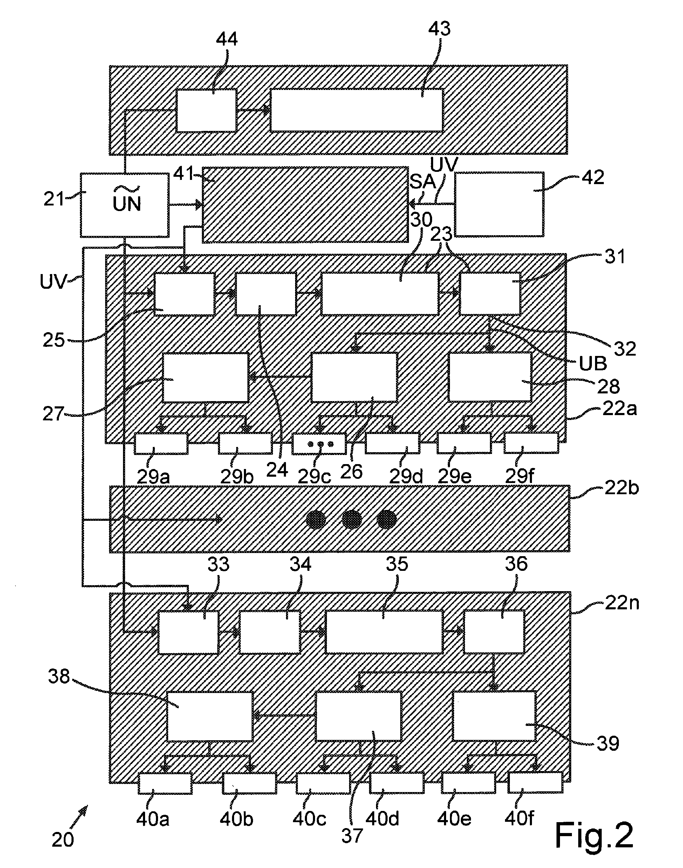

Eine in Fig. 2 dargestellte Schaltungsanordnung 20 dient zum Betreiben eines Hausgeräts, etwa eines Hausgeräts zur Zubereitung von Lebensmitteln, wie beispielsweise eines Backofens und/oder eines Kochfelds. Das Hausgerät kann also im Allgemeinen ein Gargerät sein. Dabei kann das Hausgerät zwischen einem Bereitschaftsmodus (Stand-By) und einem Betriebsmodus (Aktivmodus) hin und her geschaltet werden. Es wird angestrebt, die Energieaufnahme des Hausgeräts - also den Energieverbrauch der Schaltungsanordnung 20 - im Bereitschaftsmodus auf ein Minimum zu reduzieren.

Die Schaltungsanordnung 20 beinhaltet einen Netzanschluss 21, an welchem eine elektrische Netzspannung UN gegenüber einem Bezugspotential (Masse) anliegt, wenn die Schaltungsanordnung 20 an ein elektrisches Stromnetz angeschlossen ist. Die Schaltungsanordnung 20 umfasst auch eine Vielzahl von Schaltungseinheiten 22a, 22b bis 22n, deren Anzahl im Prinzip beliebig sein kann. Diese Schaltungseinheiten 22a, 22b bis 22n können nebengeordnete Schaltungseinheiten oder aber über- bzw. untergeordnete Schaltungseinheiten sein. Beispielsweise kann hier die Schaltungseinheit 22a eine gegenüber anderen Schaltungseinheiten übergeordnete Schaltungseinheit sein, welche eine Hauptsteuereinheit des Hausgeräts beinhaltet, durch welche weitere Schaltungseinheiten gesteuert werden.

Die Schaltungseinheiten 22a, 22b bis 22n können im Prinzip gleich aufgebaut sein.

Die Schaltungseinheit 22a umfasst folgende Komponenten: eine Hauptversorgungseinheit 23, ein Netzfilter bzw. EMV-Filter 24, einen elektrischen Schalter 25, zwei Spannungsregler 26, 27, einen Leistungsteiler 28 (secondary power line), wie auch eine Vielzahl von elektrischen Verbrauchern 29a bis 29f, deren Anzahl beliebig sein kann. Zur Hauptversorgungseinheit 23 gehören ein Brückengleichrichter 30 - gegebenenfalls mit einem Glättungskondensator - sowie ein Netzteil 31, wie beispielsweise ein Schaltnetzteil. Die Hauptversorgungseinheit 23 ist über das Netzteil 24 sowie über den elektrischen Schalter 25 mit dem Netzanschluss 21 elektrisch koppelbar. Aus der Netzspannung UN kann die Hauptversorgungseinheit 23 eine Betriebsspannung UB erzeugen, nämlich an einem Ausgang 32. Die Betriebsspannung UB ist dabei eine Gleichspannung mit einer Amplitude von beispielsweise 3V oder 5V oder 7V oder 9V oder 12V oder 15V oder 17V oder 19V oder 24V. Diese Amplitude kann ganz allgemein in einem Wertebereich von 3V bis 24V liegen.

Die Betriebsspannung UB wird durch den Spannungsregler 26 stabilisiert, über welchen die elektrischen Verbraucher 29c und 29d gespeist werden. Mit dem Spannungsregler 26 ist auch der weitere Spannungsregler 27 verbunden, über welchen die Verbraucher 29a und 29b versorgt werden. Die Betriebsspannung UB wird auch von dem Leistungsteiler 28 abgegriffen, welcher die Verbraucher 29e und 29f versorgt.

Die elektrischen Verbraucher 29a bis 29f können beliebige elektrische Verbraucher beinhalten. Lediglich beispielhaft können an dieser Stelle eine Hauptsteuereinheit (Mikrocontroller) des Hausgeräts, wie auch Temperatursensoren und dergleichen genannt werden.

Ähnlich wie die Schaltungseinheit 22a können auch die weiteren Schaltungseinheiten 22b bis 22n - hier wird auf die Schaltungseinheit 22n Bezug genommen - einen elektrischen Schalter 33, ein Netzfilter 34, einen Brückengleichrichter 35, ein Netzteil 36, zwei Spannungsregler 37, 38, einen Leistungsteiler 39 umfassen, wie auch eine Vielzahl von elektrischen Verbrauchern 40a bis 40f.

Mit dem Netzanschluss 21 sind außerdem Spannungsversorgungsmittel 41 direkt verbunden. Die Spannungsversorgungsmittel 41 können beispielsweise ein kleines Netzteil umfassen, welches aus der Netzspannung UN eine Versorgungsspannung UV bereitstellen kann. Die Versorgungsspannung UV ist eine Gleichspannung. Mit der Versorgungsspannung UV können die elektrischen Schalter 25, 33 geschlossen werden, um das Hausgerät von dem Bereitschaftsmodus in den Betriebsmodus zu versetzen. Mit der Versorgungsspannung UV kann auch eine Bedieneinrichtung 42 des Hausgeräts versorgt werden, die eine aktive Bedieneinrichtung sein kann.

Mit dem Netzanschluss 21 kann auch eine Leistungselektronikeinheit 43 gekoppelt werden, nämlich über einen weiteren elektrischen Schalter 44. Die Leistungselektronikeinheit 43 beinhaltet elektrische Verbraucher - etwa Heizelemente -, welche mit der Netzspannung UN oder aber einer daraus gewonnenen gleichgerichteten Netzspannung versorgt werden. Die Leistungselektronikeinheit 43 beinhaltet somit elektrische Verbraucher, welche mit einer elektrischen Spannung hoher Amplitude bzw. mit einer relativ großen Leistung versorgt werden. Die Leistungselektronikeinheit 43 kann auch eine Vielzahl von Leistungsschaltern umfassen, welche für hohe Ströme ausgelegt sind.

Die elektrischen Schalter 25, 33, 44 sind bevorzugt mechanische Schalter, nämlich insbesondere Relais.

Nachfolgend wird die Funktionsweise der Schaltungsanordnung 20 gemäß Fig. 2 näher beschrieben:
Das Hausgerät befindet sich zunächst im Bereitschaftsmodus und ist somit abgeschaltet. Die elektrischen Schalter 25, 33, 44 sind geöffnet, sodass die Hauptversorgungseinheit 23, wie auch das Netzteil 36 sowie die Leistungselektronikeinheit 43 von dem Netzanschluss 21 elektrisch getrennt sind. Die Betriebsspannung UB wird nicht erzeugt. Ausschließlich die Spannungsversorgungsmittel 41 - insbesondere ein Netzteil - greifen im Bereitschaftsmodus die Netzspannung UN ab und wandeln diese in die Versorgungsspannung UV um. Ist die Bedieneinrichtung 42 eine aktive Einrichtung, so wird sie nun mit der Versorgungsspannung UV versorgt. Die Bedienperson kann die Bedieneinrichtung betätigen, um das Hausgerät zu aktivieren bzw. in den Betriebsmodus zu versetzen. Also betätigt die Bedienperson die Bedieneinrichtung 42. Die Bedieneinrichtung 42 erzeugt aufgrund dieser Betätigung ein Aktivierungssignal SA und gibt dieses Aktivierungssignal SA an die Spannungsversorgungsmittel 41 ab. Aufgrund dieses Aktivierungssignals SA schließen die Spannungsversorgungsmittel 41 den elektrischen Schalter 25, wie auch gegebenenfalls den Schalter 33. Die Hauptversorgungseinheit 23 erzeugt die Betriebsspannung UB am Ausgang 32. Die Hauptsteuereinheit des Hausgeräts (einer der Verbraucher 29a bis 29f) wird nun aktiviert und mit der Betriebsspannung UB versorgt. Diese Hauptsteuereinheit kann nun den weiteren Schalter 44 schließen, und das Hausgerät ist vollständig aktiviert.

Es kann auch vorgesehen sein, dass zunächst lediglich der Schalter 25 geschlossen wird und die Hauptsteuereinheit dann den Schalter 33 und gegebenenfalls auch weitere elektrische Schalter schließt.

Beim Schließen des Schalters 44 kann auch der Verlauf der Netzspannung UN berücksichtigt werden, wie auch die Temperatur eines mit dem Schalter 44 gekoppelten Einschaltstrombegrenzers. Dem liegt die Tatsache zugrunde, dass die Leistungselektronikeinheit 43 in der Regel große Kondensatoren - etwa einen Zwischenkreiskondensator - umfasst und die Einschaltströme beim Schließen des Schalters 44 relativ hoch sind. Wird der Schalter 44 bei einem Nulldurchgang der Netzspannung UN geschlossen, so kann die Stromstärke des Einschaltstroms begrenzt werden. Die Berücksichtigung der Temperatur wiederum sorgt dafür, dass das Schließen des weiteren Schalters 44 dann verhindert werden kann, wenn der Widerstandswert des Einschaltstrombegrenzers (NTC) zu gering ist.

Die Spannungsversorgungsmittel 41 können auch so ausgebildet sein, dass sie einer Verpolung des Netzanschlusses 21 (Verpolung der dreiphasigen Netzspannung UN) standhalten können. Dann können die Spannungsversorgungsmittel 41 den Netzanschluss 21 auf die Verpolung hin überprüfen. Wird eine Verpolung erkannt, so wird verhindert, dass die elektrischen Schalter 25, 33, 44 geschlossen werden. Somit können die Netzteile 31, 36 weniger komplex aufgebaut werden; sie brauchen nämlich im Gegensatz zu den Spannungsversorgungsmitteln 41 nicht so ausgebildet zu werden, dass sie einer Verpolung standhalten können.

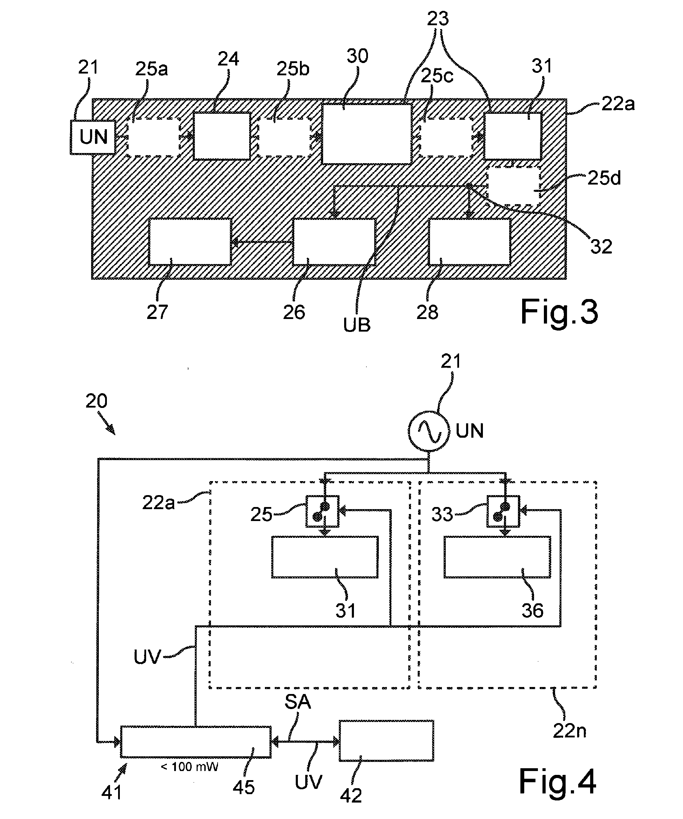

Durch den Einsatz des Schalters 25 wird erreicht, dass die Hauptversorgungseinheit 23 im Bereitschaftsmodus des Hausgeräts keine elektrische Energie verbrauchen kann bzw. dass keine Verluste entstehen können. Es erweist sich somit als besonders vorteilhaft, wenn der elektrische Schalter 25 - wie in Fig. 2 dargestellt - zwischen dem Netzfilter 24 und dem Netzanschluss 21 liegt. Der Schalter 25 - dies gilt entsprechend auch für den Schalter 33 - kann jedoch auch an einer anderen Stelle innerhalb der Schaltungseinheit 22a angeordnet sein. Mögliche Anordnungen des Schalters 25 sind in Fig. 3 dargestellt. Die möglichen Stellungen des elektrischen Schalters 25 sind dabei mit den Bezugszeichen 25a bis 25d bezeichnet. Wie aus Fig. 3 hervorgeht, kann der Schalter 25 zwischen dem Netzanschluss 21 und dem Netzfilter 24 oder zwischen dem Netzfilter 24 und dem Brückengleichrichter 30 oder zwischen dem Brückengleichrichter 30 und dem Netzteil 31 oder aber am Ausgang 32 liegen. Es können gegebenenfalls auch mehrere Schalter 25 eingesetzt werden, nämlich an unterschiedlichen Stellen 25a und/oder 25b und/oder 25c und/oder 25d. Die Hauptaufgabe des Schalters 25 besteht darin, den Ausgang 32, und somit auch die Spannungsregler 26, 27 sowie den Leistungsteiler 28 von dem Netzanschluss 21 zu trennen, nämlich im Bereitschaftsmodus des Hausgeräts.

In den Fig. 4 bis 6 sind verschiedene Ausführungsformen der in Fig. 2 allgemein dargestellten Schaltungsanordnung 20 dargestellt.

Die Schaltungsanordnung 20 gemäß Fig. 4 beinhaltet zwei Schaltungseinheiten 22a, 22n, welche jeweils ein Netzteil 31 bzw. 36 aufweisen. Die Netzteile 31, 36 können über jeweilige Schalter 25, 33 mit dem Netzanschluss 21 gekoppelt werden. Im Bereitschaftsmodus sind die Schalter 25, 33 geöffnet, und lediglich die Spannungsversorgungsmittel 41 greifen die Netzspannung UN am Netzanschluss 21 ab. Bei der Verwirklichung der Schaltungsanordnung 20 gemäß Fig. 4 wird als Spannungsversorgungsmittel 41 ein kleiner Mikrocontroller 45 eingesetzt, welcher die Netzspannung UN in die Versorgungsspannung UV umwandelt. Dieser Mikrocontroller 45 kann von der Bedieneinrichtung 42 das Aktivierungssignal SA empfangen und aufgrund dieses Aktivierungssignals SA die beiden Schalter 25, 33 schließen und somit das Hausgerät in den Betriebsmodus versetzen. Der Mikrocontroller 45 verbraucht im Bereitschaftsmodus lediglich eine elektrische Leistung von weniger als 100 mW.

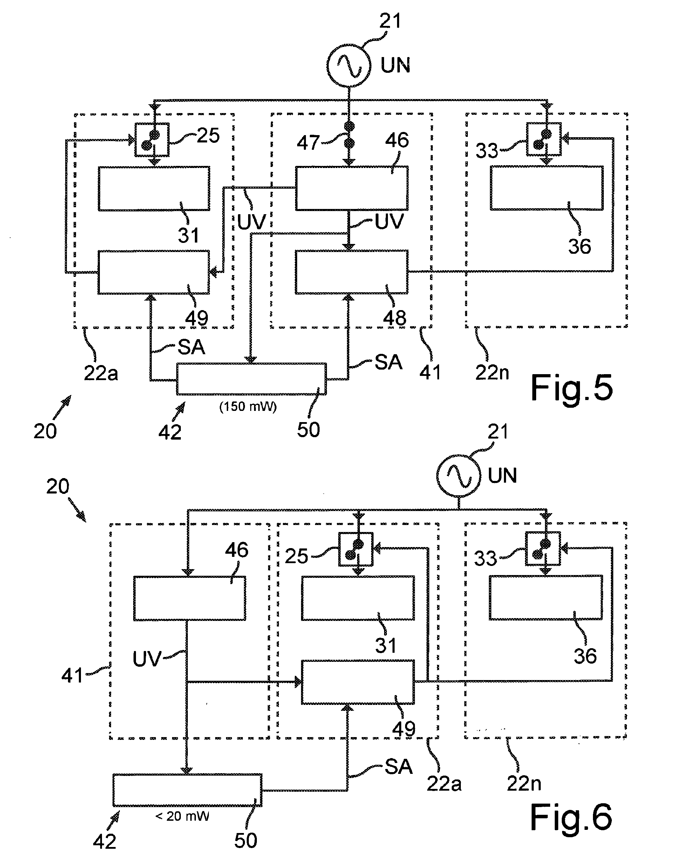

Die Schaltungsanordnung 20 gemäß Fig. 5 umfasst ebenfalls zwei Schaltungseinheiten, nämlich eine Hauptschaltungseinheit 22a sowie eine sekundäre bzw. untergeordnete Schaltungseinheit 22n. Die Hauptschaltungseinheit 22a umfasst ein Netzteil 31, welches ein Hauptnetzteil des Hausgeräts ist. Das Netzteil 31 ist über den Schalter 25 mit dem Netzanschluss 21 koppelbar. Die sekundäre Schaltungseinheit 22n umfasst ebenfalls ein Netzteil 36, welches über den Schalter 33 mit dem Netzanschluss 21 gekoppelt werden kann. Die Spannungsversorgungsmittel 41 umfassen im Ausführungsbeispiel gemäß Fig. 5 ein Netzteil 46, welches über eine Brücke 47 - etwa eine Steckbrücke - mit dem Netzanschluss 21 permanent verbunden ist. Zu den Spannungsversorgungsmitteln 41 gehören auch zwei Stand-By-Mikrocontroller, nämlich ein erster Stand-By-Mikrocontroller 48 sowie ein zweiter Mikrocontroller 49, welcher ein Teil der Schaltungseinheit 22a ist. Im Bereitschaftsmodus werden die beiden Stand-By-Mikrocontroller 48, 49 mit der Versorgungsspannung UV versorgt, welche durch das Netzteil 46 im Bereitschaftsmodus erzeugt wird. Diese Versorgungsspannung UV kann in einem Wertebereich von 5V bis 24V liegen. Mit der Versorgungsspannung UV wird auch die Bedieneinrichtung 42 versorgt, welche hier einen Mikrocontroller 50 beinhaltet. Wird die Bedieneinrichtung 42 durch die Bedienperson betätigt, so erzeugt der Mikrocontroller 50 Aktivierungssignale SA an die Stand-By-Mikrocontroller 48, 49, und die Stand-By-Mikrocontroller 48, 49 schließen aufgrund dieser Aktivierungssignale SA die jeweiligen Schalter 25 bzw. 33. Der Mikrocontroller 50 kann mit den Stand-By-Mikrocontrollern 48, 49 beispielsweise über einen Kommunikationsbus verbunden sein, nämlich beispielsweise über den LIN-Bus. Die Aktivierungssignale SA können also Nachrichten sein, welche über den Kommunikationsbus an die Stand-By-Mikrocontroller 48, 49 übertragen werden. Im Bereitschaftsmodus verbraucht der Mikrocontroller 50 lediglich 150 mW. Die Stand-By-Mikrocontroller 48, 49 können hier auch in einen internen Bereitschaftsmodus versetzt werden und erst mit den Aktivierungssignalen SA aktiviert werden.

Die Schaltungsanordnung 20 gemäß Fig. 6 entspricht im Wesentlichen der Schaltungsanordnung 20 gemäß Fig. 5, mit dem Unterschied, dass auf den Stand-By-Mikrocontroller 48 verzichtet wurde. Stattdessen wird der Schalter 33 auch mittels des Stand-By-Mikrocontrollers 49 geschlossen. Der Mikrocontroller 50 der Bedieneinrichtung 42 kann hier kleiner ausgeführt werden, weil er das Aktivierungssignal SA lediglich an einen einzigen Stand-By-Mikrocontroller 49 abgeben muss. Der Mikrocontroller 50 verbraucht hier im Bereitschaftsmodus eine Leistung von weniger als 20 mW.

### Bezugszeichenliste

- 1: Schaltungsanordnung
- 2: Netzanschluss
- 3: Bezugspotential
- 4: Hauptversorgungseinheit
- 5: Brückengleichrichter
- 6: Spannungswandler
- 7: Ausgang
- 8a bis 8e: elektrische Verbraucher
- 9: Spannungsregler
- 10: Spannungsregler
- 11: Leistungsteiler
- 20: Schaltungsanordnung
- 21: Netzanschluss
- 22a bis 22n: Schaltungseinheiten
- 23: Hauptversorgungseinheit
- 24: Netzfilter
- 25: elektrischer Schalter
- 25a bis 25d: mögliche Stellungen des elektrischen Schalters 25
- 26,27: Spannungsregler
- 28: Leistungsteiler
- 29a bis 29f: elektrische Verbraucher
- 30: Brückengleichrichter
- 31: Netzteil
- 32: Ausgang
- 33: elektrischer Schalter
- 34: Netzfilter
- 35: Brückengleichrichter
- 36: Netzteil
- 37, 38: Spannungsregler
- 39: Leistungsteiler
- 40a bis 40f: elektrische Verbraucher
- 41: Spannungsversorgungsmittel
- 42: Bedieneinrichtung
- 43: Leistungselektronikeinheit
- 44: weiterer Schalter
- 45: Mikrocontroller
- 46: Netzteil
- 47: Brücke
- 48: Stand-By-Mikrocontroller
- 49: Stand-By-Mikrocontroller
- 50: Mikrocontroller
- SA: Aktivierungssignal
- UB: Betriebsspannung
- UN: Netzspannung
- UV: Versorgungsspannung

## Patentansprüche

1. Hausgerät, welches zwischen einem Bereitschaftsmodus und einem Betriebsmodus schaltbar ist, mit einem Netzanschluss (21), an welchem eine elektrische Netzspannung (UN) gegenüber einem Bezugspotential anlegbar ist, mit einer Hauptversorgungseinheit (23), die dazu ausgebildet ist, an ihrem Ausgang (32) eine elektrische Betriebsspannung (UB) aus der Netzspannung (UN) bereitzustellen, und mit zumindest einem elektrischen Verbraucher (29a bis 29f), der mit der Betriebsspannung (UB) versorgbar ist, und mit einem
elektrischen Schalter (25), mittels welchem im Bereitschaftsmodus zumindest der Ausgang (32) der Hauptversorgungseinheit (23) von dem Netzanschluss (21) elektrisch getrennt ist, sowie mit dem Netzanschluss (21) gekoppelte und von der Hauptversorgungseinheit (23) separate Spannungsversorgungsmittel (41), welche im Bereitschaftsmodus an dem Netzanschluss (21) die Netzspannung (UN) abgreifen und aus dieser Netzspannung (UN) eine Versorgungsspannung (UV) bereitstellen, mit welcher der elektrische Schalter (25) in seinen elektrisch leitenden Schaltzustand und hierdurch das Hausgerät von dem Bereitschaftsmodus in den Betriebsmodus schaltbar sind, **gekennzeichnet durch**
eine Leistungselektronikeinheit (43), die über einen weiteren, insbesondere mechanischen, Schalter (44) mit dem Netzanschluss (21) elektrisch gekoppelt ist, wobei beim Schalten des Hausgeräts von dem Bereitschaftsmodus in den Betriebsmodus zunächst der erste elektrische Schalter (25) und anschließend der weitere Schalter (44) in den jeweiligen elektrisch leitenden Schaltzustand geschaltet werden.

2. Hausgerät nach Anspruch 1, **gekennzeichnet durch** eine Bedieneinrichtung (42), die dazu ausgebildet ist, aufgrund einer Betätigung **durch** eine Bedienperson ein Aktivierungssignal (SA) zu erzeugen, aufgrund dessen der elektrische Schalter (25) in den leitenden Schaltzustand schaltbar ist.

3. Hausgerät nach Anspruch 1 oder 2, **dadurch gekennzeichnet, dass** im Bereitschaftsmodus ausschließlich die Spannungsversorgungsmitte! (41) mit dem Netzanschluss (21) elektrisch verbunden sind.

4. Hausgerät nach einem der vorhergehenden Ansprüche, **dadurch gekennzeichnet, dass** der elektrische Schalter (25) ein mechanischer Schalter, insbesondere ein Relais, ist.

5. Hausgerät nach einem der vorhergehenden Ansprüche, **dadurch gekennzeichnet, dass** der Schalter (25) elektrisch zwischen dem Netzanschluss (21) und der Hauptversorgungseinheit (23) angeordnet ist.

6. Hausgerät nach Anspruch 5, **gekennzeichnet durch** ein mit der Hauptversorgungseinheit (23) gekoppeltes Netzfilter (24), wobei der Schalter (25) elektrisch zwischen dem Netzanschluss (21) und dem Netzfilter (24) angeordnet ist.

7. Hausgerät nach Anspruch 1, **dadurch gekennzeichnet, dass** unter Berücksichtigung eines Verlaufs der Netzspannung (UN) der weitere Schalter (44) in seinen leitenden Schaltzustand schaltbar ist.

8. Hausgerät nach Anspruch 1 oder 7, **gekennzeichnet durch** einen mit dem weiteren Schalter (44) in Reihe geschalteten Einschaltstrombegrenzer zum Schutz des weiteren Schalters (44) vor einem Einschaltstrom, wobei eine Temperatur des Einschaltstrombegrenzers erfassbar ist und der weitere Schalter (44) unter Berücksichtigung der Temperatur schaltbar ist.

9. Hausgerät nach einem der vorhergehenden Ansprüche, **dadurch gekennzeichnet, dass** die Spannungsversorgungsmittel (41) dazu ausgebildet sind, in dem Bereitschaftsmodus anhand der abgegriffenen Netzspannung (UN) den Netzanschluss (21) auf eine Verpolung hin zu überprüfen.

10. Verfahren zum Betreiben eines Hausgeräts, welches zwischen einem Bereitschaftsmodus und einem Betriebsmodus geschaltet wird, wobei an einem Netzanschluss (21) eine elektrische Netzspannung (UN) gegenüber einem Bezugspotential angelegt wird und eine Hauptversorgungseinheit (23) an ihrem Ausgang (32) eine elektrische Betriebsspannung (UB) aus der Netzspannung (UN) bereitstellt, und wobei zumindest ein elektrischer Verbraucher (29a bis 29f) mit der Betriebsspannung (UB) versorgt wird, und im Bereitschaftsmodus zumindest der Ausgang (32) der Hauptversorgungseinheit (23) von dem Netzanschluss (21) mittels eines elektrischen Schalters (25) elektrisch getrennt wird, wobei mit dem Netzanschluss (21) gekoppelte Spannungsversorgungsmittel (41) im Bereitschaftsmodus an dem Netzanschluss (21) die Netzspannung (UN) abgreifen und aus dieser Netzspannung (UN) eine Versorgungsspannung (UV) bereitstellen, mit welcher der elektrische Schalter (25) in seinen elektrisch leitenden Schaltzustand und hierdurch das Hausgerät von dem Bereitschaftsmodus in den Betriebsmodus geschaltet werden, **dadurch gekennzeichnet, dass** eine Leistungselektronikeinheit (43) über einen weiteren, insbesondere mechanischen, Schalter (44) mit dem Netzanschluss (21) elektrisch gekoppelt ist, wobei beim Schalten des Hausgeräts von dem Bereitschaftsmodus in den Betriebsmodus zunächst der erste elektrische Schalter (25) und anschließend der weitere Schalter (44) in den jeweiligen elektrisch leitenden Schaltzustand geschaltet werden.

## Claims

1. Domestic appliance, which can be switched between a standby mode and an operating mode, with a mains connection (21), at which an electrical mains voltage (UN) can be applied relative to a reference potential, with a main supply unit (23), which is configured to supply an electrical operating voltage (UB) from the mains voltage (UN) at its output (32), and with at least one electrical consumer (29a to 29f), which can be supplied with the operating voltage (UB), and with an
electrical switch (25), by means of which at least the output (32) of the main supply unit (23) is electrically isolated from the mains connection (21) in standby mode, and voltage supply means (41), which are separate from the main supply unit (23) and are coupled to the mains connection (21) and which tap the mains voltage (UN) at the mains connection (21) in standby mode and supply a supply voltage (UV) from said mains voltage (UN), with which the electrical switch (25) can be switched to its electrically conducting switching state, by which means the domestic appliance can be switched from standby mode to operating mode, **characterised by**
a power electronics unit (43), which is coupled electrically by way of a further, in particular mechanical, switch (44) to the mains connection (21), whereby when the domestic appliance is switched from standby mode to operating mode, the first electrical switch (25) is switched to the respective electrically conducting switching state first and then the further switch (44).

2. Domestic appliance according to claim 1, **characterised by** an operating facility (42), which is configured to generate an activation signal (SA) based on actuation by an operator, on the basis of which the electrical switch (25) can be switched to the conducting switching state.

3. Domestic appliance according to claim 1 or 2, **characterised in that** only the voltage supply means (41) are electrically connected to the mains connection (21) in standby mode.

4. Domestic appliance according to one of the preceding claims, **characterised in that** the electrical switch (25) is a mechanical switch, in particular a relay.

5. Domestic appliance according to one of the preceding claims, **characterised in that** the switch (25) is disposed electrically between the mains connection (21) and the main supply unit (23).

6. Domestic appliance according to claim 5, **characterised by** a mains filter (24) coupled to the main supply unit (23), the switch (25) being disposed electrically between the mains connection (21) and the mains filter (24).

7. Domestic appliance according to claim 1, **characterised in that** the further switch (44) can be switched to its conducting switching state taking into account a profile of the mains voltage (UN).

8. Domestic appliance according to claim 1 or 7, **characterised by** an inrush current limiter connected in series to the further switch (44) to protect the further switch (44) from an inrush current, it being possible to detect a temperature of the inrush current limiter and to switch the further switch (44) taking into account the temperature.

9. Domestic appliance according to one of the preceding claims, **characterised in that** the voltage supply means (41) are configured to check the mains connection (21) for any polarity reversal based on the tapped mains voltage (UN) in standby mode.

10. Method for operating a domestic appliance, which is switched between a standby mode and an operating mode, wherein an electrical mains voltage (UN) is applied relative to a reference potential at a mains connection (21) and a main supply unit (23) supplies an electrical operating voltage (UB) from the mains voltage (UN) at its output (32) and wherein at least one electrical consumer (29a to 29f) is supplied with the operating voltage (UB), and at least the output (32) of the main supply unit (23) is electrically isolated from the mains connection (21) by means of an electrical switch (25) in standby mode, with voltage supply means (41) coupled to the mains connection (21) tapping the mains voltage (UN) at the mains connection (21) in standby mode and supplying a supply voltage (UV) from said mains voltage (UN), with which the electrical switch (25) is switched to its electrically conducting switching state, by which means the domestic appliance is switched from standby mode to operating mode, **characterised in that** a power electronics unit (43) is coupled electrically by way of a further, in particular mechanical, switch (44) to the mains connection (21), whereby when the domestic appliance is switched from standby mode to operating mode, the first electrical switch (25) is switched to the respective electrically conducting switching state first and then the further switch (44).

## Revendications

1. Appareil ménager, lequel peut être commuté entre un mode de veille et un mode de fonctionnement, comprenant un branchement au secteur (21) sur lequel une tension de secteur électrique (UN) peut être appliquée par rapport à un potentiel de référence, comprenant une unité d'alimentation principale (23) qui est réalisée pour fournir à sa sortie (32) une tension de service électrique (UB) à partir de la tension de secteur (UN), et comprenant au moins un consommateur électrique (29a à 29f) qui peut être alimenté avec la tension de service (UB), et comprenant un commutateur électrique (25) au moyen duquel, en mode de veille, au moins la sortie (32) de l'unité d'alimentation principale (23) est électriquement séparée du branchement au secteur (21), et comprenant des moyens d'alimentation en tension (41) couplés au branchement au secteur (21) et séparés de l'unité d'alimentation principale (23), lesquels, en mode de veille, prélèvent la tension de secteur (UN) sur le branchement au secteur (21) et fournissent à partir de cette tension de secteur (UN) une tension d'alimentation (UV), avec laquelle le commutateur électrique (25) est commutable dans son état de commutation électro-conducteur et avec laquelle l'appareil ménager est ainsi commutable du mode de veille en mode de fonctionnement, **caractérisé par** une unité d'électronique de puissance (43) qui est couplée électriquement au branchement au secteur (21) par l'intermédiaire d'un commutateur supplémentaire (44), notamment mécanique, le premier commutateur électrique (25), lors de la commutation de l'appareil ménager du mode de veille en mode de fonctionnement, étant d'abord commuté et ensuite le commutateur supplémentaire (44) étant commuté dans l'état de commutation respectivement électro-conducteur.

2. Appareil ménager selon la revendication 1, **caractérisé par** un dispositif de commande (42) qui est réalisé pour générer un signal d'activation (SA) en raison d'une activation par une personne de service, suite auquel signal d'activation le commutateur électrique (25) est commutable dans l'état de commutation conducteur.

3. Appareil ménager selon la revendication 1 ou 2, **caractérisé en ce qu'**en mode de veille uniquement les moyens d'alimentation en tension (41) sont raccordés électriquement au branchement au secteur (21).

4. Appareil ménager selon l'une quelconque des revendications précédentes, **caractérisé en ce que** le commutateur électrique (25) est un commutateur mécanique, notamment un relais.

5. Appareil ménager selon l'une quelconque des revendications précédentes, **caractérisé en ce que** le commutateur (25), du point de vue électrique, est disposé entre le branchement au réseau (21) et l'unité d'alimentation principale (23).

6. Appareil ménager selon la revendication 5, **caractérisé par** un filtre de réseau (24) couplé à l'unité d'alimentation principale (23), le commutateur (25), du point de vue électrique, étant disposé entre le branchement au réseau (21) et le filtre de réseau (24).

7. Appareil ménager selon la revendication 1, **caractérisé en ce que** compte tenu d'une courbe de la tension de secteur (UN), le commutateur supplémentaire (44) est commutable dans son état de commutation conducteur.

8. Appareil ménager selon la revendication 1 ou 7, **caractérisé par** un limiteur de courant de démarrage connecté en série avec le commutateur supplémentaire (44) pour la protection du commutateur supplémentaire (44) contre un courant de démarrage, une température du limiteur de courant de démarrage étant saisissable et le commutateur supplémentaire (44) étant commutable compte tenu de la température.

9. Appareil ménager selon l'une quelconque des revendications précédentes, **caractérisé en ce que** les moyens d'alimentation en tension (41) sont réalisés pour vérifier une inversion de polarité du branchement au secteur (21) en mode de veille à l'aide de la tension de secteur prélevée (UN).

10. Procédé de fonctionnement d'un appareil ménager, lequel est commuté entre un mode de veille et un mode de fonctionnement, une tension de secteur électrique (UN) étant appliquée sur un branchement au secteur (21) par rapport à un potentiel de référence et une unité d'alimentation principale (23) fournissant à sa sortie (32) une tension de service électrique (UB) à partir de la tension de secteur (UN), et au moins un consommateur électrique (29a à 29 f) étant alimenté avec la tension de service (UB), et, en mode de veille, au moins la sortie (32) de l'unité d'alimentation principale (23) étant électriquement séparée du branchement au secteur (21) au moyen d'un commutateur électrique (25), les moyens d'alimentation en tension (41) couplés au branchement au secteur (21) prélevant, en mode de veille, la tension de secteur (UN) sur le branchement au secteur (21) et fournissant à partir de cette tension de secteur (UN) une tension d'alimentation (UV) avec laquelle le commutateur électrique (25) est commuté dans son état de commutation électro-conducteur et avec laquelle l'appareil ménagé est ainsi commuté du mode de veille en mode de fonctionnement, **caractérisé en ce qu'**une unité d'électronique de puissance (43) est couplée électriquement au branchement au secteur (21) par l'intermédiaire d'un commutateur supplémentaire (44), notamment mécanique, le premier commutateur électrique (25), lors de la commutation de l'appareil ménager du mode de veille en mode de fonctionnement, étant d'abord commuté et ensuite le commutateur supplémentaire (44) étant commuté dans l'état de commutation respectivement électro-conducteur.
